# EUROPEAN PATENT APPLICATION

(11) **EP 1 255 067 A1**
(43) Date of publication of application: **06.11.2002**
(21) Application number: 02009739.0
(22) Date of filing: 30.04.2002
(51) Int. Cl.: F16K 31/06

(54) **Electrically operated pressure control valve**

(30) Priority: 03.05.2001 US 848006
(71) Applicant: EATON CORPORATION, Cleveland, Ohio 44114-2584 (US)
(72) Inventor: Arnold, William John, Lapeer, Michigan 48446 (US)
(74) Representative: Patentanwälte Rüger, Barthelt & Abel

(57) **Abstract**

A solenoid operated pressure biased spool valve for controlling flow between a pressure inlet port (24) and a valving chamber ported to a control signal port (22). The spool (30) also controls bleed flow from the valving chamber to an exhaust port (28). The solenoid armature (52) is connected to an operating rod (50) biased for end-to-end contact with the spool. An adjustment screw (72) is provided in a pole piece (56) and is adjusted at calibration to limit armature and operating rod travel when the exhaust port is fully open at maximum coil current and the pressure bias on the spool tends to zero. Upon de-energization, impulse contact of the operating rod and spool does not occur and pressure transients are thus eliminated.

## Description

### BACKGROUND OF THE INVENTION

The present invention relates to control valves of the type which control a pressure signal to a control outlet from a source of pressurized fluid and particularly hydraulic fluid by bleeding off fluid to an exhaust port typically connected to a sump or pump return for the system to be controlled. Valves of this type have found widespread usage in automotive applications for controlling the pressure of the fluid for an hydraulically assisted power steering system and also for controlling the shifting actuators in an automatic power transmission.

Typically such valves are of the spool type operated by an electromagnetic solenoid with the moveable armature of the solenoid operatively connected for causing the desired movement of the spool to control the flow from the pressurized inlet to a valving chamber connected to the control signal outlet port and also to control flow from the valving chamber to an exhaust or sump return outlet port.

Solenoid operated spool valves of the aforesaid type have been provided with a pressure balanced spool or a spool arranged such that the pressure forces acting on the spool produce a desired relatively slight bias force tending to move the spool in a direction to reduce the pressure to the control signal outlet port. In such pressure force biased solenoid operated spool valves, it has been found that where the pressure in the valving chamber approaches zero, as the valve reduces the flow from the high pressure inlet port to the valving chamber as a result of the exhaust port being opened, the pressure bias forces on the valve spool tend also to zero. In certain designs the pressure bias forces are relied upon to maintain the spool and actuator in contact with the armature to ensure accurate control of the movement of the spool in response to electrical energization.

However, as the solenoid energization is increased and the spool is moved to a position reducing the pressure in the control signal output and opening the exhaust port, and the bias forces on the spool tends to zero the spool stops moving even though the armature continues its movement. Upon increasing energization of the solenoid, the armature can move away from the spool and its actuating member and thus cause lash to occur between the armature and the spool. Upon de-energization a relative velocity is developed between the armature and the spool and the armature gains momentum and contacts the spool with an impulse thereby producing transients or perturbations in the hydraulic system to be controlled.

Accordingly, it has been desired to provide a way or means of preventing lash from occurring in a solenoid operated spool type pressure control valve as the pressure in the pressure control port and valving chamber tends to zero upon opening of the exhaust port and pressure force bias on the spool is eliminated. It has further been desired to provide such a solenoid operated pressure control valve which is not subject to perturbations in the system to be controlled due to armature impulse on the spool at zero control pressure. It has further been desired to provide such a valve which is relatively low in manufacturing cost and easy to assemble and calibrate. It has been particularly desired to provide such a solenoid operated pressure control valve which is suitable for low voltage, low current energization for motor vehicle applications.

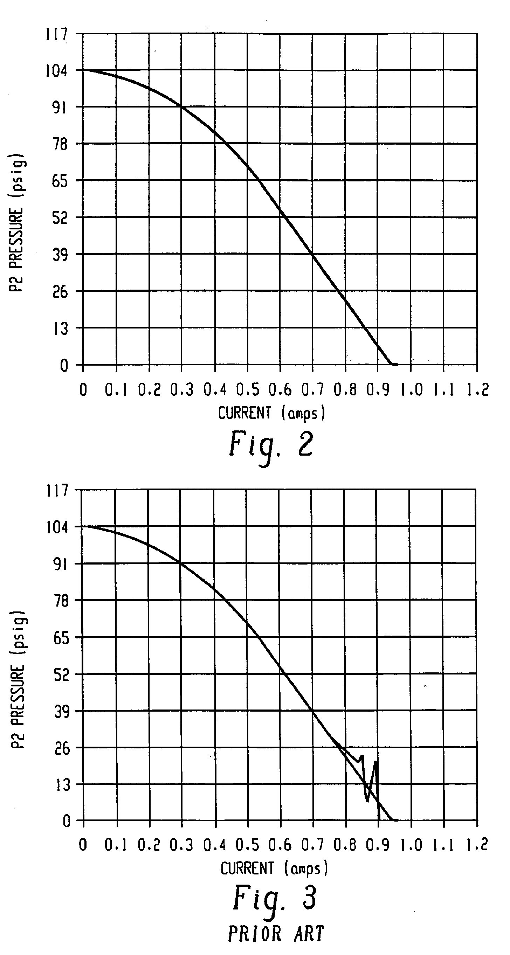

Referring to FIG. 3, a plot of control signal output port pressure (P2) as a function of coil energization current is shown for a Prior Art valve wherein as the pressure (P2) approaches zero at high levels of solenoid coil current. In the Prior Art valve plot shown in FIG. 3, it is seen that upon decreasing the current from the maximum level of energization, substantial perturbations or oscillations of the control pressure (P2) occur as evidenced by the pressure excursions near zero current level.

### BRIEF SUMMARY OF THE INVENTION

The present invention provides a solenoid operated spool-type pressure control valve for controlling flow at a desired pressure to a signal output or control port adapted for connection to a hydraulic system to be controlled from a valving chamber which is connected to a pressurized source of fluid; and, the valving chamber is also connected to an exhaust outlet port through which flow is controlled by the spool for discharge to a sump or pump return.

The valve of the present invention has the valving spool provided with a first annular valving land for controlling flow from the inlet port to the valving chamber; and, a second land controls flow from the valving chamber to the exhaust with the control pressure signal outlet port continuously connected to the valving chamber. The spool has the second valving land for the exhaust port formed of larger diameter than the first land to provide a greater annular area exposed to the valving chamber such that the pressure forces in the valving chamber provide a bias on the spool in the direction tending to open the exhaust port. The solenoid armature has an operated rod connected thereto which contacts the end of the spool; and, the armature and operating rod are spring biased to move the spool in a direction tending to close the exhaust port and to open the inlet port, thereby providing maximum pressure to the control pressure chamber and control signal outlet port. Upon energization, the armature is pulled in a direction tending to close a working gap with a pole piece and permitting the hydraulic bias to move the spool in a direction tending to close the inlet port and open the exhaust port. The maximum travel of the solenoid and operating rod are limited by an adjustable stop pin provided in the pole piece to prevent the armature from completely closing the working air gap and being moved away from the spool as the hydraulic bias on the spool approaches zero when the exhaust port is fully opened.

### BRIEF DESCRIPTION OF THE DRAWINGS

FIG. 1 is a cross-section of the valve assembly of the present invention taken through the axis of symmetry of the spool and armature;

FIG. 2 is a graph of control signal outlet pressure (P2) as a function of coil energization current; and,

FIG. 3 is a plot similar to FIG. 2 of a valve of the known Prior Art.

### DETAILED DESCRIPTION OF THE INVENTION

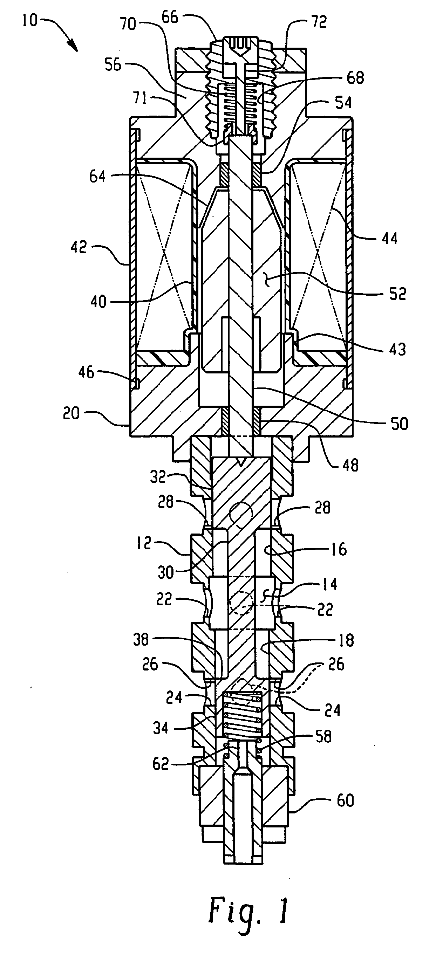

Referring to FIG. 1, the valve assembly of the present invention is indicated generally at 10 and includes a valve body 12 defining a valving chamber 14 therein which communicates with a first valving bore 16 at the upper end thereof and a second valving bore 18 of lesser diameter at the lower end thereof. The valve body 12 has an upper portion comprising an annular flux collector or pole segment 20 attached to upper end of the body 12 by any suitable expedient such as press fitting, weldment, adhesive bonding or threaded connection.

Valve body 12 has at least one, and preferably a plurality of, control pressure outlet ports 22 formed therein and communicating with the valving chamber 14. A plurality of inlet ports 24 disposed in body 12 in axially spaced arrangement from the ports 22; and, ports 24 are adapted to be connected to a source (not shown) of pressurized fluid as, for example, a hydraulic pump. As illustrated in FIG. 1, the ports 24 are preferably formed with a feathering notch 26 on one side thereof to provide decreased pressure sensitivity as the ports are closed as will hereinafter be described. A third set of ports 28 are disposed in axially spaced arrangement on the opposite sides of valving chamber 14 from the inlet ports 24; and, ports 28 are adapted for connection to a pump inlet (not shown) or sump (not shown) and are thus considered exhaust ports.

A valving spool 30 is slidably disposed in valving chamber 14 with the spool having an upper annular valving land or surface 32 formed thereon which closely interfits the bore 16 in precision sliding engagement for limiting fluid leakage; and, a lower inlet valving land 34 is formed thereon which also closely interfits the bore 18 in precision sliding engagement in a manner which minimizes fluid leaking therebetween.

It will be understood that valving lands 34 and 32 are of appropriate axial length so as to have land 32 covering exhaust ports 28 with inlet land 34 covering the inlet ports 24. It will be understood that the lower annular axial face 36 of land 32 is located axially on spool 30 so as to provide opening and closing of the ports 28 with a relative limited movement in the axial direction. Similarly, the upper axial face 38 of land 34 is disposed to effect opening and closing of the inlet ports 24 including notches 26.

In the present practice of the invention for an automotive application providing low pressure control in the range 130 to zero PSIG (900 to zero kPa). It has been found satisfactory to have the full stroke movement of the spool in the axial direction in the range of .014 to .017 inches (0.35 to 0.43 mm) for maximum current energization of the electrical actuator as will hereinafter be described. It will be understood however, that the invention is not limited to the aforesaid pressure ranges and stroke arrangements and other valves may be employed in accordance with the needs of the fluid powered application in which the valve is used.

The flux collector 20 has one end of a coil bobbin 40 received thereon and registered over an annular hub 43 which extends upwardly from the lower flux collector 20. Bobbin 40 has a coil 44 wound thereon with the ends thereof (not shown) extending outwardly of the coil for external electrical connection thereto in a manner well known in the art.

An outer casing or shell 42 is received over the coil 44 and the shell 42 has the lower end thereof mounted on the flux collector 20 and registered on annular shoulder 46 and retained thereon by any suitable expedient as, for example, press fit, staking, crimping or suitable adhesive. The casing 42 is formed of magnetically permeable material for completing a flux loop about the coil 44.

Flux collector 20 has a lower bearing 48 disposed therein with one end of an operating rod or actuating member 50 received therein in sliding arrangement. The lower end of member 50 contacts the upper end of spool 30. The operating rod has attached thereover an annular armature 52 with the operating rod 50 having its upper end extending through the armature and through a second bearing 54 provided in an upper pole piece 56 which is attached to the upper end of casing 42 in a manner similar to the connection of the lower end of casing 42 to the flux collector 20.

The lower end of the spool 30 has the upper end of spring 58 registered thereagainst; and, the lower end of spring 58 is retained in bore 18 by a suitable plug secured to the lower end of the body 12. A vent port 62 is formed through the plug 60 for venting the lower end of the spool to atmospheric or ambient pressure.

The upper end of the armature 52 forms an annular preferably conically tapered working air gap denoted by reference numeral 64 with the upper pole piece 56. A cap or plug 66 is threadedly received in the upper end of pole piece 56; and, plug 66 has a recess 68 formed in the lower end thereof which has received therein a spring 70 which registers against a bushing 71 provided on the upper end of the actuating member 50. An adjustment pin 72 is threadedly engaged in the plug 66 for external adjustment therein; and, the pin 72 extends downwardly through the plug 66 and its lower end is adjustably positioned to contact the upper end of rod 50 and limit the upward travel of the rod and armature 52.

In operation, the spool is biased upwardly by the pressure forces in valving chamber 14 and the control pressure outlet port 22 acting on the differential area between the lower face of land 32 and the upper face of land 34; and, the upper end of the spool registers against the lower end of the operating rod 50.

In operation with the coil 44 in the de-energized condition, spring 70 maintains or pushes the operating rod 50 and armature 52 downwardly against the spool 30. In the fully energized condition of the coil, that is with maximum current flowing therethrough, the armature is attracted upwardly minimizing air gap 64 until the upper end of the rod 50 registers against the lower end of pin 72. It will be understood that the pin 72 is adjusted during calibration to prevent the air gap 64 from closing completely and thus prevents further movement of the armature and prevents the lower end of the rod 50 from being moved away from the upper end of spool 30.

With reference to FIG. 2, it will be seen from the graph that at maximum current flow in coil 44, the pressure in chamber 14 and the control pressure (P2) in the outlet ports 22 goes to zero. In this condition with zero pressure in chamber 14, there is no effective hydraulic bias of the spool in the upward direction. Thus, the calibration of pin 72 prevents the armature and operating rod from being pulled further upward by the magnetic forces acting on the armature 52; and, the lower end of the operating rod is maintained in contact with the spool upper end. The pressure trace for the valve of the present invention shown in FIG. 2 illustrates the absence of pressure transients in the control pressure chamber 14 and the pressure outlet ports 22 which is present in the pressure plot for the Prior Art valves as shown in FIG. 3.

The present invention thus provides a unique and novel solenoid operated pressure control valve which limits the upward travel of the armature at maximum current energization to prevent lash between the operating rod and the spool and upon de-energization eliminates impulse contact of the operating rod with spool and resultant transients in the control pressure outlet port which would be transmitted to the system to be controlled.

Although the invention has hereinabove been described with respect to the illustrated embodiments, it will be understood that the invention is capable of modification and variation and is limited only by the following claims.

## Claims

1. An electrically operated pressure control valve assembly comprising:
(a) a valve body having a valving bore defining an inlet port, a control outlet port and an exhaust port disposed in spaced relationship along the bore and communicating therewith;
(b) a valve member disposed in the bore and slidably moveable therein for controlling pressure between the inlet port and the control outlet port and between the control outlet port and the exhaust port;
(c) a solenoid operator disposed with said body and including a coil and armature moveable in response to electrical energization of the coil for closing a working air gap with a pole piece;
(d) an actuating member moveable with said armature and contacting said valve member for effecting said movement thereof, wherein, as said armature closes said air gap, said valve member opens said exhaust port and bleeds said control outlet port pressure to exhaust pressure; and,
(e) an adjustable stop operable to limit the movement of said armature and prevent closing of said working air gap as said control port pressure reaches said exhaust port pressure.

2. The assembly defined in claim 1, wherein said actuating member comprises an elongated member received through said armature.

3. The assembly defined in claim 1, wherein said armature has an annular configuration with said actuating member received therethrough.

4. The assembly defined in claim 1, wherein said valve member comprises a spool having a first and second axially spaced valving land thereon.

5. The assembly defined in claim 1, wherein said adjustable stop includes a member threadedly engaging said pole piece.

6. The assembly defined in claim 1, wherein said adjustable stop includes an elongated member threadedly engaged with said pole piece and contacting the proximal end of said actuating member.

7. The assembly defined in claim 1, wherein said armature and pole piece have complementary surfaces thereon defining a conically tapered configuration for said working air gap.

8. The assembly defined in claim 1, wherein said actuating member is slidably guided in a pair of axially spaced bearings.

9. The assembly defined in claim 1, wherein said valve member includes an annular exhaust valving land for controlling exhaust outlet port flow and an annular inlet metering land for controlling inlet port flow axially spaced thereon.

10. The assembly defined in claim 1, wherein said valve member includes an annular exhaust valving land for controlling flow to the exhaust outlet port and an annular inlet valving land for controlling inlet port flow, wherein said inlet valving land has a lesser diameter than the exhaust valving land, thereby providing a fluid pressure bias force in a direction opening the exhaust outlet port.

11. A method of operating a solenoid operated pressure control valve of the type having a fluid pressure inlet port, a control pressure outlet port and an exhaust port comprising:
(a) disposing a valve spool in a bore communicating with said ports;
(b) disposing a solenoid having a coil and moveable armature adjacent an end of the spool;
(c) connecting an actuator rod to the armature and controlling the spool with said actuator rod;
(d) disposing a pole piece with the coil and forming a working air gap with the armature;
(e) disposing an adjustable stop adjacent said actuating rod and adjusting the limit of movement of said actuator for limiting closing of the working air gap and movement of the armature when said coil is energized at maximum current.

12. The method defined in claim 11, wherein said step of disposing an adjustable stop includes threading a pin in said pole piece.
